Europäisches Patentamt

European Patent Office

Office européen des brevets

(11) Veröffentlichungsnummer: **0 265 618**

**A2**

(12) # EUROPÄISCHE PATENTANMELDUNG

(21) Anmeldenummer: 87112223.0

(22) Anmeldetag: 22.08.87

(51) Int. Cl.⁴: **G01N 23/223** , G01N 23/20

(30) Priorität: **31.10.86 DE 3637076**

(43) Veröffentlichungstag der Anmeldung:
**04.05.88 Patentblatt 88/18**

(84) Benannte Vertragsstaaten:
**DE FR GB NL**

(71) Anmelder: **GKSS Forschungszentrum
Geesthacht GmbH
Max-Planck-Strasse
D-2054 Geesthacht(DE)**

(72) Erfinder: **Knoth, Joachim
Duwockskamp 14
D-2050 Hamburg 80(DE)**
Erfinder: **Schneider, Harald
Wandbeker Ring 28
D-2050 Escheburg(DE)**
Erfinder: **Schwenke, Heinrich
Fernsicht 4
D-2050 Escheburg(DE)**

(74) Vertreter: **Gottlob, Peter
Kernforschungszentrum Karlsruhe GmbH
Stabs. Patente und Lizenzen Weberstrasse 5
D-7500 Karlsruhe 1(DE)**

(54) **Verfahren und Vorrichtung zur Messung der Analysiertiefe in oberflächennahen Schichten.**

(57) Die Erfindung betrifft ein Verfahren zur Messung der Analysiertiefe in oberflächennahen Schichten im Totalreflexionsbereich, bei dem die Oberfläche einer Probe mittels Röntgenstrahlung beaufschlagt und mit einem über der Probe befestigten ersten Detektor die von der Probe ausgehende Fluoreszenzstrahlung erfaßt wird und bei der eine als optische Bank dienender Körper vorgesehen ist, gegenüber dem die Oberfläche der Probe ausgerichtet wird und der einen Strahlführungskanal für die anregende und die reflektierte Röntgenstrahlung aufweist, sowie eine Einrichtung zur Durchführung des Verfahrens.

Die der Erfindung zugrundeliegende Aufgabe besteht darin, das e. g. Verfahren und eine Einrichtung zu dessen Durchführung derart auszugestalten, daß eine Röntgenfluoreszenzanalyse von Schichten unterhalb der Oberfläche im Bereich der Totalreflexion erreichbar ist.

Die Lösung ist dadurch gekennzeichnet, daß

a) im Strahlengang der reflektierten Strahlung ein zweiter Detektor angeordnet wird, vor dem

b) eine Schlitzblende zur Ausblendung der reflektierten Strahlung in verschiedene Stellungen positioniert wird und daß mit

c) einer Blendenanordnung, die anstelle der Probe an der optischen Bank justiert wird, die maximale Intensität der anregenden Röntgenstrahlung mit dem zweiten Detektor erfaßt wird.

EP 0 265 618 A2

### Verfahren und Vorrichtung zur Messung der Analysiertiefe in oberflächennahen Schichten

Die Erfindung betrifft ein Verfahren zur Messung der Analysiertiefe in oberflächennahen Schichten im Totalreflexionsbereich, bei dem die Oberfläche einer Probe mittels Röntgenstrahlung beaufschlagt und mit einem über der Probe befestigten ersten Detektor die von der Probe ausgehende Fluoreszenzstrahlung erfaßt wird und bei der eine als optische Bank dienender Körper vorgesehen ist, gegenüber dem die Oberfläche der Probe ausgerichtet wird und der einen Strahlführungskanal für die anregende und die reflektierte Röntgenstrahlung aufweist, sowie eine Einrichtung zur Durchführung des Verfahrens.

Die Analyse oberflächennaher Schichten ist ein unentbehrlicher Verfahrensschritt bei der Entwicklung und Kontrolle einiger Prozesse von erheblicher technologischer Bedeutung, z. B. bei der Herstellung von Halbleiterbaulelementen und von photoelektrischen Schichten. In einer älteren Anmeldung P 36 06 748 ist ein Gerät beschrieben, mit dem die Elementzusammensetzung von Oberflächenschichten mit großer Empfindlichkeit bestimmt werden kann. Dies wurde im wesentlichen erreicht durch den streifenden Einfall eines Röntgenstrahls auf eine speziell positionierte Oberfläche mit energiedispersiver Detektion der aus der Oberfläche stammenden Fluoreszenzstrahlung. Bei der Erprobung des Gerätes z. B. in der Anwendung auf Gallium-Arsenid-Oberflächen zeigte es sich jedoch, daß wesentliche Effekte sich nur in den ersten 100 nm der Oberfläche beobachten lassen. Eindringtiefen, die deutlich unter 100 nm liegen, sind jedoch nur mit extrem kleinen Einfallswinkeln von wenigen Bogenminuten zu erreichen, die im Bereich der Totalreflexion von Röntgenstrahlen liegen. Bei Winkeln unter oder in der Nähe des Grenzwinkels der Totalreflexion wird ein drastischer Intensitätsabfall der Fluoreszenzstrahlung beobachtet. Dank der besonderen Konstruktion werden zwar trotz der geringen Fluoreszenzintensität bis hinunter zu etwa 2 Bogenminuten noch gut auswertbare Röntgenfluoreszenzspektren gewonnen, der Intensitätsabfall im Bereich der Totalreflexion weist aber auf einen physikalischen Effekt hin, der ohne weitere technische Maßnahme die Messung der Analysiertiefe nach der Röntgenfluoreszenzmethode ausschließt. Ohne Kenntnis der Analysiertiefe können jedoch z. B. Diffusions-oder Implantationseffekte nicht untersucht werden.

Die Schwierigkeit besteht darin, daß im Bereich der Totalreflexion die zur Anregung der Fluoreszenzstrahlung der Atome benötigte Energie nur zu einem kleinen Teil durch die Oberfläche transportiert wird. Bei perfekter Totalreflexion würde trotz voller Intensität der Röntgenstrahlung an der Oberfläche schon die unmittelbar unter der Oberfläche liegende Schicht keine Fluoreszenzstrahlung mehr aussenden. Die Oberfläche bildet im Totalreflexionsfall also eine Grenzebene, unterhalb derer das normalerweise angewendete Verfahren zur Eichung der Apparatur - durch Aufbringen dünner Filme bekannten Elementgehaltes auf die Oberfläche - nicht mehr angewendet werden kann.

Die der Erfindung zugrundeliegende Aufgabe besteht darin, das e. g. Verfahren und eine Einrichtung zu dessen Durchführung derart auszugestalten, daß eine Röntgenfluoreszenzanalyse von Schichten unterhalb der Oberfläche im Bereich der Totalreflexion erreichbar ist.

Die Lösung ist in den kennzeichnenden Merkmalen des Anspruches 1 beschrieben.

Die übrigen Ansprüche geben vorteilhafte Einrichtungen zur Durchführung des erfindungsgemäßen Verfahrens wieder.

Zum Verständnis des erfindungsgemäßen Verfahrens sind zwei Gleichungen (1) und 2) notwendig. Die erste (1) beschreibt den Zusammenhang zwischen der scheinbaren Masse m', die aus dem entsprechenden Peak des Röntgenfluoreszenzspektrums mit der oberhalb der Oberfläche gültigen Eichung ermittelt wird, mit der wahren Masse m in einem, z. B. durch Blende und Analysiertiefe definierten, Volumen.

$$ m = \frac{m'}{(1 - R) \cdot K} $$

Dabei ist die Reflektivität R der zwischen 0 und 1 liegende Bruchteile der einfallenden Strahlung, der reflektiert wird. R = 0 bedeutet keine Reflexion, R = 1 bedeutet ideale vollständige Totalreflexion. K ist ein Faktor, der die im Bereich der Totalreflexion zu beachtende Kompression des Feldes der anregenden Strahlung in der Oberfläche beschreibt. Bei Einfallswinkeln jenseits des Grenzwinkels der Totalreflexion wird der Kompressionsfaktor K gleich eins.

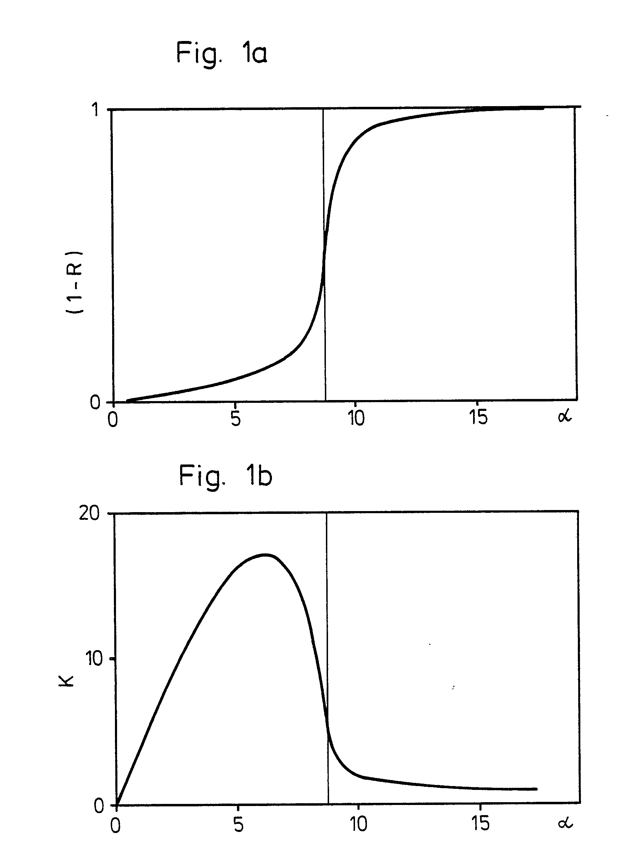

Ein typischer Verlauf der Funktion (1-R) ist in Fig. 1a in Abhängigkeit von dem eingestellten Einfallswinkel $\alpha$ im Bereich der Totalreflexion am Beispiel einer Gallium-Arsenid-Oberfläche bei Anregung mit der Molybdän = $K_{\alpha}$-Strahlung angeführt. Fig. 1b zeigt den Verlauf von K unter den gleichen Bedingungen.

Nach Kenntnis der wahren Masse m aus Gleichung (1) kann die Analysiertiefe T direkt bestimmt werden aus Gleichung

$$(2) \qquad T = \frac{m}{p \cdot F} \qquad mit$$

$$p = Dichte$$

$$F = Fläche \ des \ ausgeblendeten \ Oberflächenstückes$$

Zweckmäßigerweise wird dabei aus dem Fluoreszenzspektrum die Masse eines Hauptbestandteils der Oberfläche, z. B. des Elements Arsen in GaAs oder Silizium aus Silizium-Schichten gewählt.

Erfindungsgemäß kann die Analysiertiefe also gemessen werden, wenn die Einrichtung so gestaltet wird, daß die Größen m', R und K aus Gleichung (1) erfaßt werden.

Die Spurenelementkonzentration $C_i$ eines beliebigen Elements i in der gemessenen Oberflächenschicht wird in einem Meßvorgang mitbestimmt nach Gleichung

$$(3) \qquad C_i = \frac{m'_i}{F \cdot T \cdot (1-R) \cdot K} \qquad mit$$

$$m'_i = gemessene \ scheinbare \ Masse \ des \ Spurenelements \ i$$

$$K, \ F, \ T \ und \ R \ wie \ oben.$$

Das oben begründete Problem der geringen Fluoreszenzintensität im Bereich der Totalreflexion (-schlechte Energieübertragung durch die Oberfläche) erfordert eine sehr kompakte Meßeinrichtung, weil die Intensität der primären Röntgenstrahlung und damit auch die Fluoreszenzstrahlung mit dem Quadrat der Entfernung der Anode von der Probe abnimmt. Bei den aus diesen Grund notwendigen kurzen Distanzen von ca. 100 - 150 mm wird es praktisch unmöglich, den effektiven Einfallswinkel mit der für eine Analysiertiefenbestimmung über Gleichung (1) notwendigen Exaktheit festzulegen, um aus dem Einfallswinkel die Korrekturfaktoren K und R zu errechnen. Auch bei sorgfältiger Fertigung aller den Röntgenstrahl definierenden Bauelemente (Blenden, Anschläge, Röhrenhöhe, Anodenbreite) ergeben sich rechnerisch nicht mehr erfaßbare Toleranzen, die die Zuverlässigkeit der angestrebten Aussa gen gefährden. Darüber hinaus ist es selbst bei perfekter Kenntnis der geometrischen Daten unbefriedigend, sich ausschließlich auf gerechnete Werte und die ihnen zugrundeliegenden oft unsicheren Annahmen, z. B. über die Materialeigenschaften und den Einfluß des Spektrums der anregenden Strahlung zu stützen.

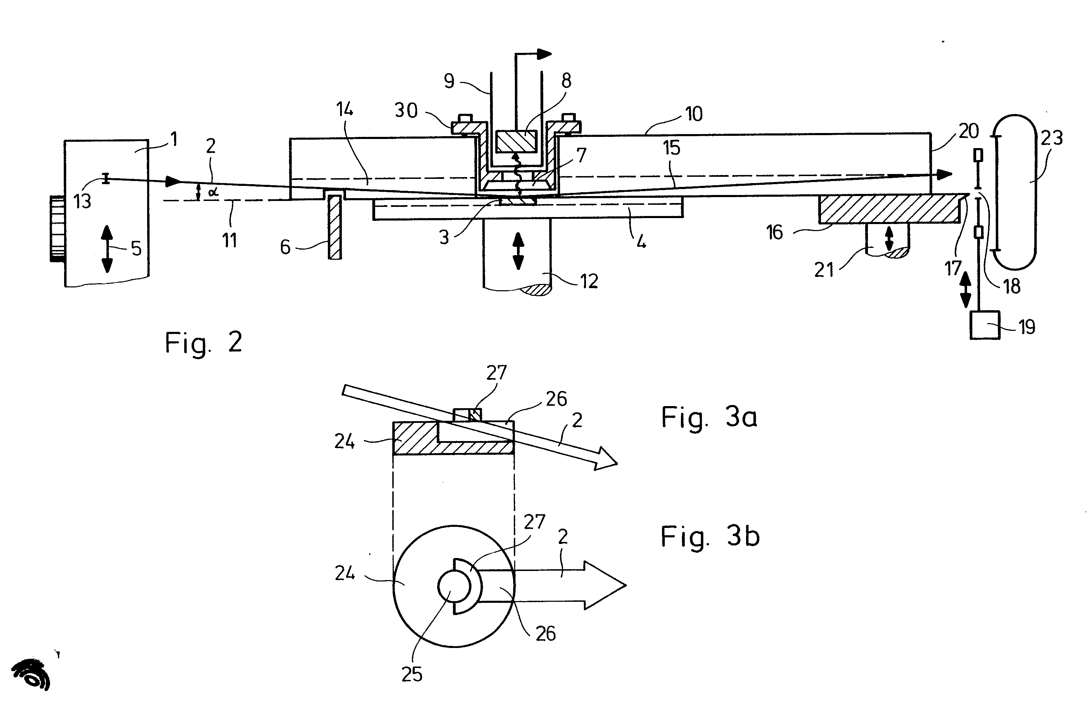

Die Erfindung wird im folgenden anhand eines Ausführungsbeispiels mittels der Fig. 2 - 4 näher erläutert.

Die Fig. 2 zeigt schematisch und im Schnitt die Einrichtung, mit der der effektive Einfallswinkel, die auf ein ausgeblendetes Oberflächenstück fallende Intensität der primären Strahlung und die reflektierte Strahlung erfaßt werden kann. Die Primärstrahlung 2 der Röntgenröhre 1 wird streifend in einem Winkel α von wenigen Bogenminuten auf die Oberfläche 3 der zu untersuchenden Probe 4 gerichtet. Die Einstellung des wirksamen Einfallswinkels α erfolgt durch Veränderung der Höhe 5 der Röntgenröhre 1, die Divergenz des Primärstrahls 2 wird durch eine Zungenblende 6 begrenzt. Die Fluoreszenzstrahlung 7 aus der Probe 4 wird mit einem ersten Detektor 8 aufgefangen, der in einer Abschirmung 9 mit Zylinderblendenöffnung 30 senkrecht zur Oberfläche 3 der Probe 4 ausgerichtet ist.

Der Quarzkörper 10 dient als optische Bank, wobei seine Unterseite als Referenzebene 11 zur Ausrichtung der Probe 4 mittels einer Andrückvorrichtung 12 und als Bezugsebene für die Höhe 5 der Feinfokus-Anode 13 der Röntgenröhre 1 sowie der Zungenblende 6 und der Zylinderblende 30 dient. Diese Zylinderblende 30 ist in einer Ausnehmung des Quarzkörpers 10 untergebracht. In die Unterseite des Quarzkörpers 10 ist ein Kollimatorkanal 14 für die Primärstrahlung 2 und die reflektierte Strahlung 15 eingefügt.

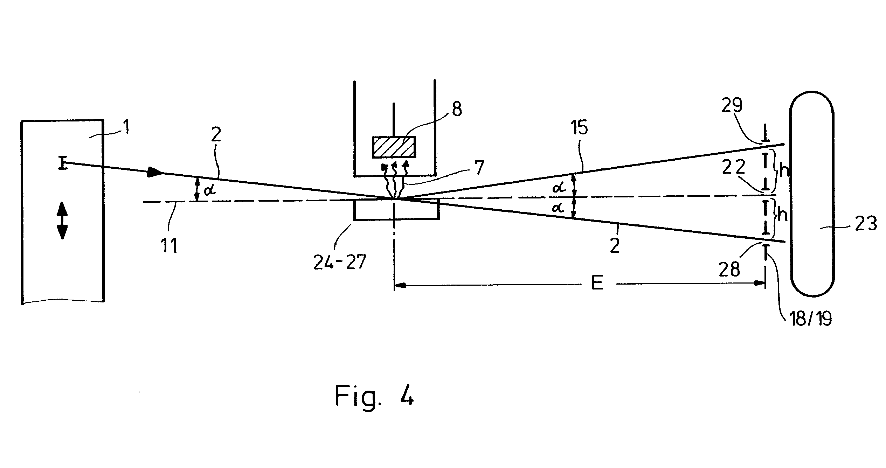

Der die Referenz-bzw. Bezugsebene 11 mechanisch definerende Quarzkörper 10 ist über den Bereich der Probe 4 hinaus erheblich verlängert und bildet an seinem freien Ende 20 eine hochgenaue Positionierfläche für eine mit einer Schneidkante 17 versehene Justierhilfe 16, die an den Quarzkörper 10 mittels der Andrückvorrichtung 21 angepreßt werden kann. Gegenüber dem freien Ende 20 ist eine Schlitzblende 18 reproduzierbar höhenverstellbar. Die Justierhilfe 16 kann mit der Höhenverstellung 19 für die Schlitzblende 18 mechanisch verbunden sein, so daß die Schlitzblende 18 genau in die Bezugsebene 11 ausrichtbar ist. Diese Position ist als Nullposition 22 festgelegt (Fig. 4). Hinter der verstellbaren Schlitzblende 18 ist ein zweiter Röntgendetektor 23, z. B. eine Ionisationskammer, angebracht. Wesentlich ist, daß die Breite der Schlitzblende 18 so gewählt wird, daß sichergestellt ist, daß bei der Messung der reflektierten Intensität $I_R$ nur der zu untersuchende Oberflächenbereich 3 (definiert durch die Öffnung der Zylinderblende 30) berücksichtigt wird, also ebenfalls reflektierende Oberflächenzonen der Probe 4, die im Augenblick der Messung nicht interessieren, ausgeblendet werden.

Dies wird ermöglicht durch eine zur Einrichtung gehörige gestufte Ringblende 24 die im Schnitt in Fig. 3a und in Aufsicht in Fig. 3b dargestellt ist, mit gleicher effektiver Öffnung 25 wie die Zylinderblende 30. Sie dient als Hilfsvorrichtung zur Messung der Intensität, des effektiven Winkels sowie der Divergenz des Anteils der Primärstrahlung 2 (gem. Fig. 2), die auf den Bereich 3 der zu untersuchenden Oberfläche der Probe 4 fällt, der durch die Öffnung der Zylinderblende 30 (Fig. 2) definiert ist und der Öffnung 25 der Ringblende 24 entspricht. Die Ringblende 24 (Fig. 3a und b) bestreht hierzu im wesentlichen aus einer Scheibe mit einer Nut 26, die an ihrem Ende abgerundet ist. Über der Nut 26 erstreckt sich ein halbkreisförmiger Zylinder 27, dessen Innenfläche mit dem abgerundeten Mittenbereich der Nut 26 die Öffnung 25 umrandet. Die durchgehende Primärstrahlung 2 ist als Pfeil dargestellt.

Nach Einstellung der Nullposition 22 gemäß Fig. 4 der Schlitzblende 18 mittels der Justierhilfe 16 und der Höhenverstellung 19 wird die gestufte Ringblende 24 - 27 an Stelle der Probe 4 mit der Andrückvorrichtung 12 präzise in Meßposition gebracht. Daraufhin wird die Schlitzblende 18 so in Position 28 tiefer gefahren, daß am Detektor 23 maximale Intensität anliegt.

Damit ist der effektive Einfallswinkel $\alpha$ nach Gleichung

$$(4) \qquad \alpha = \tan \alpha = \frac{h}{E}$$

und $I_o$ bestimmt.

Daraufhin wird die Ringblende 24 wieder durch die zu messende Probe 4 ersetzt und die Schlitzblende 18 um genau 2h (h = Abstand Position 22 zu Position 28) nach Position 29 verfahren. In dieser Position 29 werden mit dem ersten Detektor 8 die entsprechenden Fluoreszenzintensitäten 7 und mit dem zweiten Detektor 23 die reflektierte Intensität $I_R$ gemessen. Damit sind m' bzw. $m_i'$ und R über $R = \frac{I_R}{I_o}$ bestimmt, also alle Größen, die zur Messung der Eindringtiefe nach Gleichung (1) und (2) benötigt werden, mit Ausnahme des Kompressionsfaktors K, der sich einer direkten Messung entzieht. K hängt jedoch ebenso wie der Reflexionsfaktor R, außer von dem meßbaren effektiven Einfallswinkel $\alpha$, im wesentlichen vom komplexen Brechungsindex ab. Dieser Brechungsindex, der u. a. die material-und energieabhängige Dämpfung der Röntgenstrahlung beschreibt, kann zusätzlich durch Vergleich von $R_{gemessen}$ mit $R_{gerechnet}$ bestimmt werden, so daß die Meßsignale auch zur Bestimmung des Kompressionsfaktors K herangezogen werden können.

Erfindungsgemäß ist es daher möglich, daß die auf ein definiertes Oberflächenstück 3 fallende Primärintensität 2, ihr effektiver Einfallswinkel $\alpha$ und die zugehörige reflektierte Intensität $I_R$ so gemessen werden können,daß in einem zerstörungsfreien Meßvorgang die Elementzusammensetzung in der oberflächennahen Schicht zusammen mit der Analysiertiefe bestimmt wird. Zur Ermittlung von oberflächennahen Konzentrationsprofilen kann die Eindringtiefe der Primärstrahlung 2 sowohl durch Änderung des Einfallswinkel $\alpha$ als auch durch Erhöhung der Spannung der Anode 13 kontrolliert variiert werden.

**Ansprüche**

1. Verfahren zur Messung der Analysiertiefe in oberflächennahen Schichten im Totalreflexionsbereich, bei dem die Oberfläche einer Probe mittels Röntgenstrahlung beaufschlagt und mit einem über der Probe befestigten ersten Detektor die von der Probe ausgehende Fluoreszenzstrahlung erfaßt wird und bei der eine als optische Bank dienender Körper vorgesehen ist, gegenüber dem die Oberfläche der Probe ausgerichtet wird und der einen Strahlführungskanal für die anregende und die reflektierte Röntgenstrahlung aufweist,

dadurch gekennzeichnet, daß

a) im Strahlengang (15) der reflektierten Strahlung ein zweiter Detektor (23) angeordnet wird, vor dem

b) eine Schlitzblende (18) zur Ausblendung der reflektierten Strahlung in verschiedene Stellungen (22, 28, 29) positioniert wird und daß mit

c) einer Blendenanordnung (24 - 27), die anstelle der Probe (3, 4) an der optischen Bank (10) justiert wird, die maximale Intensität der anregenden Röntgenstrahlung (2) mit dem zweiten Detektor (23) erfaßt wird.

2. Einrichtung zur Durchführung des Verfahrens nach Anspruch 1, dadurch gekennzeichnet, daß an der optischen Bank (10) in Ausbreitungsrichtung der reflektierten Strahlung (15) eine Justierhilfe (16) für die Positionierung (19) der Schlitzblende (18) vor dem zweiten Detektor (23) angeordnet ist und daß die Blendenanordnung (24 - 27) derart ausgebildet ist, daß von zweiten Detektor (23) eine durch eine Fläche (25) hindurchtretende Primärintensität aufnehmbar ist, wobei diese Fläche (25) einem definierten Oberflächenteil (30) der Probe (4) entspricht, aus dem der erste Detektor (8) die Fluoreszenzstrahlung (7) aufnimmt.

3. Einrichtung nach Anspruch 2, dadurch gekennzeichnet, daß die Blendenanordnung (24 - 27) eine gestufte Ringblende ist.

4. Einrichtung nach Anspruch 2 und 3, dadurch gekennzeichnet, daß die Justierhilfe (16) mittels einer Andrückvorrichtung (21) gegen die Unterfläche des Körpers (10) anpreßbar ist.

5. Einrichtung nach Anspruch 1 oder einem der folgenden, dadurch gekennzeichnet, daß die Schlitzblende (18) im wesentlichen senkrecht zur reflektierten Strahlung (15) relativ zum feststehenden Körper (10) und feststehenden zweiten Detektor (23) bewegbar ist.

5

Fig. 1a

Fig. 1b

**Fig. 2**

**Fig. 3a**

**Fig. 3b**

0 265 618

PLA 8677

Fig. 4

0 285 618

PLA 8677